# EUROPEAN PATENT APPLICATION

(11) **EP 4 745 555 A1**
(43) Date of publication of application: **20.05.2026**
(21) Application number: 24213758.6
(22) Date of filing: 18.11.2024
(51) Int. Cl.: G01N 15/06, G01N 15/10, G01N 15/00

(54) **A CAPACITVE SENSOR, A DEVICE AND A METHOD FOR SELECTIVE COUNTING OF SINGLE DROPLETS AND PARTICLES COMPRISING WATER IN AIR**

(71) Applicant: Jozef Stefan Institute, 1000 Ljubljana (SI); Nanotul d.o.o., 1000 Ljubljana (SI)
(72) Inventor: Malok, Matjaz, 9000 Murska Sobota (SI); Remskar, Maja, 1215 Medvode (SI); Kavsek, Darko, 1290 Grosuplje (SI)
(74) Representative: Patentni Biro AF d.o.o.

(57) **Abstract**

The invention relates to a method and a device adapted for the selective counting of individual respiratory droplets and particles comprising water within ambient air. The method is based on a planar capacitive sensor to which droplets and particles are led with a nozzle, which increases their velocity. Entering the electric field of the capacitive sensor, the respiratory droplets and particles change the sensor's capacitance. Because the respiratory droplets and particles containing water exhibit a notably distinct dielectric constant compared to other airborne particles and the air itself, they are counted in a selective way independently on other particulate matter air pollutants. The alteration in the capacitance is converted into an electrical signal, which is measured by known methods.

## Description

### Field of the invention

The invention generally belongs to the field of electric methods and systems for selective counting of single droplets or particles containing water, with dielectric constant different from the surrounding medium. The present invention relates to a method and a capacitive sensor as well as a device for selective counting of single droplets and particles comprising water in ambient air.

The primary application of the invention is a selective counting of aerosolized respiratory droplets in indoor air. The secondary applications of the method and the device are monitoring of pollen in air, microorganisms in air, droplets of mixture of water and oil in air, and droplets of mixture of a liquid gas, water, and oil in air.

### Background and the technical problem

The prevention of airborne diseases spread in crowded areas is a global concern. Infected individuals release nano- and micro-sized respiratory droplets comprising viruses or other bioaerosols into air, posing a risk of infection to healthy individuals, particularly in indoor settings. Besides water, the respiratory droplets are composed of mucins and salts, which prevent them to dry out at a non-saturated relative humidity (RH). The respiratory droplets only partially evaporate until they reach an equilibrium diameter, which is smaller from the diameter immediately after expiration by a factor around 2.6 (Groth et al., 2021; doi: 10.1098 /rsif.2021.0209).

There is no dedicated instrument on market or reported for the selective measurement of single respiratory droplets on a purely electric principle in indoor air. The selectivity means that the instrument measures only respiratory droplets and not solid pollutants, such as particulate matter, PM1, PM2.5, PM10, and ultrafine particles (nanoparticles) in air. The present invention thus aims to provide a device and a method capable of distinguishing of aerosol droplets from solid aerosol particles.

### Prior art

The present invention is an upgrade of patents SI22895B and US9151724 B2 developed by the present inventors. In these two documents, the aerosol nanoparticles were encapsulated in water droplets, and the dielectric space between both electrodes of the capacitor was filled with water. Under impact of droplets into this water reservoir between both electrodes at a high speed, craters filled with air formed in this water, which were much larger than the size of droplets. The change of capacitance caused by this principle was measurable. The principle is not appropriate for a selective measurement, because it does not differentiate between respiratory droplets and droplets of water encapsulated nanoparticles. Both documents disclose a method that is not selective for measurement of respiratory droplets, as the droplets and the particles are encapsulated in water and the sensor is arranged to sense the impact of water encapsulated aerosols. Thus, with encapsulation in water the information about the composition of the droplet is lost. The present invention differs in this regard and allows selectivity.

A condensation particle counter of droplets using a capacitive method using interdigitated electrodes has been reported by Jeon et al., (2022; doi: 10.1016/j.jaerosci.2022.105996). This method is not selective and does not count single droplets. The essence is that the particles and water droplets are encapsulated in water, hence the reason for non-selectivity is the same as for the above-mentioned prior art documents.

Optical particle counters disclosed by Shen et al. (2022; doi: 10.1073/pnas.2203086119) and Xie et al (2009; doi: 10.1098/rsif.2009.0388.focus). Information on droplet concentration is revealed in a way that solid particles were firstly removed from air, and then the air was mixed with respiratory droplets, which were measured by light scattering.

Particle image velocimetry (PIV) disclosed by Zhu et al. (2006; doi: 10.1016/j.buildenv.2005.06.024) are also not selective. PIV detects respiratory particles, but only immediately after coughing or sneezing. Furthermore, the equipment for PIV is large and comprises a laser screen, which means that the tested persons have to be protected. Therefore, this solution is not suitable for monitoring of respiratory droplets.

Measuring of droplets of different size in air on a capacitive principle were reported by Zargar and Islam (2019; doi: 10.1109/tie.2018.2863205), Ernst et al. (2009; doi: 10.1016/j.sna.2009.04.023) and patent IN201711024806 B. The latter documents use a cross-capacitive structure, which is not used in the present invention. The change in capacitance was induced by droplets passing through the electric field generated by the sensor. Ernst et al. cite droplet size of 336 µm, while Zargar and IN201711024806 report 1.8 mm, which means that the droplet size is significantly larger than the respiratory droplets. The capacitor was driven by the AC voltage and the detection principle is not possible without an active high-pass filtration.

The CMOS chip circuit described by York et al. (2001; doi: 10.1016/s0924-4247(01)00542-8) was designed for measuring particulate matter including droplets in the air with velocities up to 10 m/s, which hit the surface of the chip sensor. This method is not appropriate for measuring droplets in a flow, of the µm size and with velocities higher than 10 m/s. The present invention differs from this solution by the shape of the capacitor, and in detection of all droplets in air, which enter electric field of the sensor, while York et al. were only able to detect the droplets if they hit the detector surface.

Detection of single particles by deposition onto electrode was reported by Ciccarella (2016; doi: 10.1109/jssc.2016.2607338). This method is not selective during the time of measurement because the deposited particles are investigated optically afterwards. The particles are accumulated on the surface and then the capacitive measurement is performed. A presence of water droplets causing artifacts; hence an air drying is used. The present invention does not require such accumulation of particles, and it is sufficient that droplets only travel through the electric field.

A microsensor for capacitive detection of particulate matter directly in the air was reported by Carminati et al. (2014. doi: 10.1016/j.sna.2014.09.003) and it is similar to the previously described article by Ciccarella et al. The detection technique relies on impedance variations measured by microelectrodes near a stream of particulate matter. This system can resolve single PM10 particles with a time resolution of 10 ms. This method is not appropriate for a detection of fast droplets and is not selective. Both methods, by Ciccarella et al. and Carminati et al. accumulate particles on a surface, which causes a change in capacitance. However, both are silent about separating water and PM particles.

Patent application US2010194408 describes droplet detection based on a capacitive principle. This solution uses a capacitor designed as a sandwich capacitor with two parallel electrodes and the droplet can be received between said electrodes. The purpose of this solution is not measurement or detection of particles in air, but most likely for controlling droplet manipulation in biological processes or microfluidics.

### Description of the solution to the technical problem

The present invention aims to provide a method and a device for selective measurement of single droplets. The invention is capable of distinguishing of aerosol droplets from solid aerosol particles. The technical problem is solved as defined in the independent claims, whereas the preferred embodiments are defined in dependent claims.

The essence of the invention is in that the device and the method are based on capacitive principle with a detection of electric signals a few tens of microseconds in duration. To the best of inventors' knowledge, no devices, or methods for the selective measurement of respiratory droplets have been reported yet.

A capacitive sensor for use in the device has been developed to allow said selective measurement, wherein the sensor comprises:
- two planar electrodes, wherein a first electrode is on or near the geometrical axis of the second electrode, which surrounds the first electrode in the same or in a different plane, wherein the first electrode is connected with a virtual ground, and the second electrode is arranged to receive a constant voltage supply, or vice versa,
- a thin layer of a non-conductive material with a high dielectric constant deposited at least partly on one or both said electrodes, and the layer is impermeable to electricity, fluid, and vapor,
- a dielectric space between and in vicinity of the said first electrode and the said second electrode, wherein the said capacitor is configured such that impacting the dielectric space with a gas comprising droplets temporarily causes changes in capacitance in a microsecond time scale of said capacitor such that the number of changes of capacitance indicates the number of single droplets impacted the said dielectric space.

In a possible embodiment of the capacitor, the first electrode, second electrode, or first and the second electrodes comprise a plurality of portions.

In a possible embodiment, the dielectric space comprises a two-dimensional space or a three-dimensional space.

In a further possible embodiment, said electrodes have interdigital shape.

In a further possible embodiment, the second of the said electrodes comprises metal parts in the vicinity of the first electrode.

The device according to the invention comprises at least the following:
- a housing defining a chamber wherein the housing is provided with an opening, which functions as an inlet to the interior of the chamber,
   ∘ a nozzle installed or formed in the inlet, said nozzle arranged to direct and accelerate air flow from the surroundings of the device at high speed towards a sensor,
   ∘ the sensor designed as a planar capacitor comprising:
      ▪ two planar electrodes, wherein the first electrode is on or near the geometrical axis of the said nozzle and the second electrode surrounding the first electrode in the same or in a different plane, wherein the first electrode is connected with a virtual ground, and the second electrode is arranged to receive a constant voltage supply in a range of a few volts, or vice versa,
      ▪ a thin layer of a non-conductive material with a high dielectric constant deposited at least partly on one or both said electrodes, and the layer is impermeable to electricity, fluid, and vapor
      ▪ a dielectric space between and in vicinity of the said first electrode and the said second electrode, wherein the said capacitor is configured such that impacting the dielectric space with a gas comprising droplets temporarily causes changes in capacitance in a microsecond time scale of said capacitor such that the number of changes of capacitance indicates the number of single droplets impacted the said dielectric space,
   - a pump for sucking ambient air into the chamber and for regulation of the air flow through the device, wherein said pump may be installed inside or outside of the device, wherein in case of the latter option, the pump is connected to the chamber via a tube or a pipe to allow sucking of air as well as air flow regulation,
   - electronics for signal acquisition and data processing, wherein said electronics are provided inside or outside the said chamber.

The nozzle may be provided in the inlet or the inlet can be formed into a nozzle with suitable diameter of the opening to allow air flow. The preferred embodiment of the device comprises the nozzle installed in the inlet. In a further preferred embodiment, the nozzle has a diameter of 0.4 mm. Other dimensions may be used, but the larger the diameter, the higher air flow is needed to ensure droplets reach the sensor at a high velocity.

In a possible embodiment, the said nozzle for directing of the said air flow towards the said first electrode forms the said second electrode. In this case the nozzle is made from electrically conductive material, preferably metal, and is connected with a (virtual) ground is used.

In a preferred embodiment, said electrodes forming the capacitor are fabricated on a 4-layer PCB (Printed Circuit Board).

The device operates in the following manner. The two electrodes generate an electric field. When droplets enter the sensor's electric field under a high velocity, they induce a time dependent change in the dielectric constant of the space situated between the said electrodes in a way that a portion of air or other medium is replaced by said droplet and thereby the capacitance of the capacitor is modified. The alternation in capacitance (ΔC) is converted into a voltage change (ΔV) according to equation: ΔV= Q/ΔC. This said voltage change is then amplified to a measurable voltage pulse.

The impact of droplets with considerably different dielectric constant than air or other carrying medium causes a significant and detectable change in the capacitance of the said capacitor. On the other hand, the change in capacitance when particulate matter or other substances with similar dielectric constant than air, enter the sensor, is too small to cause a measurable electrical signal.

The method for selective counting of single respiratory droplets in ambient air according to the invention comprises the following steps:
a) sucking of air into the chamber with the pump,
b) accelerating air through the inlet or the nozzle toward the sensor, wherein a constant voltage (V) is applied between both electrodes of the capacitor,
c) detecting the change in capacitance due to the change of the electric field of the sensor upon impacts of droplets to the sensor electric field near and between said first electrode and said second electrode, and measuring the pulse capacitance in microsecond time scale;
d) the alternation in capacitance (ΔC) is converted into a voltage change (ΔV) according to equation: ΔV= Q/ΔC, wherein said voltage change is amplified to a measurable voltage pulse;
e) determining the number of pulses caused by changes of capacitance from said number of droplets per volume unit of air in microsecond time scale entering said dielectric space, wherein said changes of pulse capacitance indicate the number of single droplets in a microsecond time scale.

The selectivity of the respiratory droplet detection is based on the fact that other solid indoor air pollutants like carbonaceous nanoparticles possess a dielectric constant smaller than 15, whereas the dielectric constant of water is approx. 78, which is approx. 80 times greater than that of air. The impact of droplets with considerably different dielectric constant than air or other carrying medium causes a significant and detectable change in the capacitance of the said capacitor. On the other hand, the change in capacitance when particulate matter or other substances with similar dielectric constant than air, enters the sensor, is too small to cause a measurable electrical signal. Thus, the method enables detection of single respiratory droplets in a real-time.

The advantages of the present invention if compared to SI22895 and US9151724 are the selectivity of methods, as the droplets are differentiated from the nanoparticles, and particles containing water are differentiated from particles without water. Since the solid nanoparticles are not encapsulated with water, they are not detected by the device according to the present invention and hence only respiratory droplets or particles with sufficient water content are detected and thus counted.

The present invention allows detection of various water-comprising particles, such as human or animal respiratory droplets, bioaerosols, droplets comprising bacteria or viruses, water-containing pollen grains, droplets of a mixture of water and oil forming cooling fluids, droplets of a mixture of liquid gas, water and oil forming cryogenic cooling fluids, frozen water droplets in the atmosphere. This is further discussed in examples.

Therefore, the present invention can be used in controlling indoor air quality during seasonal respiratory epidemics such as influenza or outbreaks of childhood diseases. Such tools are of utmost importance for pandemic preparedness in human society and for prevention of spread of respiratory diseases in animal husbandry.

### Brief description of figures

The invention will be explained by a way of an embodiment in the form of a device for counting respiratory droplets, by a way of experiment cases, and by a way of figures showing:
- Figure 1: A schematic presentation of the said device for the selective detection of single respiratory droplets and particles comprising water in ambient air, and a schematic presentation of the capacitive sensor.
- Figure 2: Results of the comparative measurement of sprayed water (a, b) and sprayed ethanol (c, d) measured by the said device (a, c) and Condensation Particle Counter-CPC (TSI Model 3080) (b, d).
- Figure 3: The comparative results of measuring smoke from smoldering scent stick (a, b) and smoke from smoldering cigarette (c, d) measured by the said device (a, c) and Condensation Particle Counter-CPC (TSI Model 3080) (b, d).
- Figure 4: The results of the detection of pollen of domestic hazel tree measured indoors by the said device: a) a background measurement without presence of the hazel pollen in air, b) measurement of hazel pollen in air.
- Figure 5: The results of the detection of pollen of domestic birch tree outdoors by the said device: a) results of the first 600 seconds of the measurement, b) results of the total 1800 seconds of measurement.
- Figure 6: The comparative results of air monitoring in a conference room with 60 adult attendees: a) indoor concentration of respiratory droplets measured by the said device, b) indoor concentration of PM2.5 measured by optical particle counter (Sensirion, SEN55), and c) outdoor concentration of PM2.5 (public data from Slovenian Environment Agency-ARSO).
- Figure 7: Signals from the sensors, wherein each signal represents a detected droplet.
- Figure 8: Enlarged pulse after an impact of a droplet to the sensor. The length of the pulse is approximately 20 µs.

### Detailed description of the invention

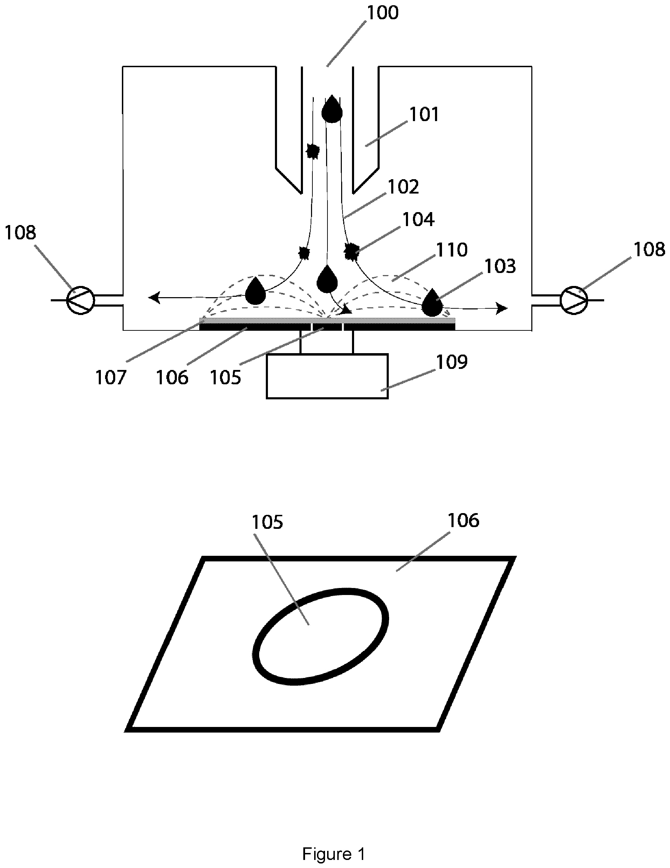

The device for counting of respiratory droplets as shown in FIG. 1 comprises an inlet **100** to the device, a nozzle **101** for directing and acceleration of the air flow **102** with respiratory droplets **103** and particles **104** towards the sensor designed as a capacitor comprising the first electrode **105** on the geometrical axis of the said nozzle **101,** and the second electrode **106** surrounding the said first electrode **105,** wherein one or both electrodes being covered with a non-conductive dielectric layer **107** of preferable thickness below 0.02 mm with a high dielectric constant preferably above 10; a pump **108** for regulation of the air flow through the device, and electronics **109** for data processing and data transfer. The first electrode **105** is connected with a virtual ground. A constant voltage is applied to the second electrode **106.** Both said electrodes forming the capacitor are fabricated on a 4-layer PCB (Printed Circuit Board).

When respiratory droplets **103** enter the sensor's electric field **110** though the nozzle **101** under a high velocity, they induce a time-dependent change in the sensor's capacitance through alteration of the quantity of dielectric material situated between the said electrodes, thereby modifying the capacitance of the capacitor. The alteration in capacitance is converted into an electrical signal, which is measured by known methods. The impact of droplets with considerably different dielectric constant than air or other carrying medium causes a significant and detectable change in the capacitance of the said capacitor.

When droplets enter the sensor's electric field under a high velocity, they induce a time dependent change in the dielectric constant of the space situated near and between the said electrodes in a way that a portion of air or other medium is replaced by said droplet and thereby the capacitance of the capacitor is modified. The alternation in capacitance (ΔC) is converted into a voltage change (ΔV) according to equation: ΔV= Q/ΔC. This said voltage change is amplified to a measurable voltage pulse.

A possible way of the said voltage change amplifications is a use of charge sensitive amplifier. The said voltage change causes the input-end potential of the charge amplifier to rise, while simultaneously, a potential with reverse polarity appears at the output- end of the charge amplifier. However, the output-end potential operates through a feedback loop to return the input-end potential to the initial value. The feedback resistance (R_f) is connected in parallel to the feedback capacitance (C_f). Therefore, the output voltage pulse discharges with a time constant (τ) determined by τ =C_f·R_f. The impact of droplets with considerably different dielectric constant than air or other carrying medium causes a significant and detectable change in the capacitance of the said capacitor. On the other hand, the change in capacitance when particulate matter or other substances with similar dielectric constant than air, enter the sensor, is too small to cause a measurable electrical signal.

### Examples

The selectivity of the said method has been proven by comparative measurement by CPC (Condensation Particle Counter, TSI 3080), and the said device at room temperature (25°C). Different substances in air were measured: sprayed water droplets and sprayed ethanol droplets using laboratory dispenser (Burkle, Pump spray bottle, No. 0309-3005), smoke from smoldering scent stick (Strawberry incense sticks, HEM Corporation, Mumbai, Bangalore, India) and from cigarette, pollen of domestic hazel tree and pollen of domestic birch tree, and respiratory droplets and PM2.5 in a conference room with 60 attendees. The said substances have different dielectric constant in comparison with air, which has dielectric constant of 1.00059 (Britannica, The Editors of Encyclopaedia. "dielectric constant". Encyclopaedia Britannica, 2 Jul. 2024, https: / /www.britannica.com /science /dielectric-constant (accessed Jul. 8, 2024). Water has dielectric constant of 78.2 (Britannica, The Editors of Encyclopaedia. "dielectric constant". Encyclopaedia Britannica, 2 Jul. 2024, https: / /www.britannica.com /science /dielectric-constant (accessed Jul. 8, 2024)). Ethanol has dielectric constant of 25.3 (Dielectric constants or permittivities of some fluids or liquids." https://www.engineeringtoolbox.com/ (accessed Jul. 8, 2024)). Soldering cigarette (Zhang et al., 2021; doi: 10.1016/j.envres.2021.111790) or scent stick (Viišć et al., 2018; doi: 10.1007/s11869-018-0572-6) consists of biomass burning and release of carbonaceous nanoparticles that have a dielectric constant smaller than 15 (Shkal et al., 2018; doi: 10.4236 /jcc.2018.61012). Pollen can contain up to 60 % of water during development and below 40 % in mature state (Pacini and Dolferus, 2019; doi: 10.3389 /fpls.2019.00679). Percentage of water theoretically determines its dielectric constant, but no experimental data exist in literature.

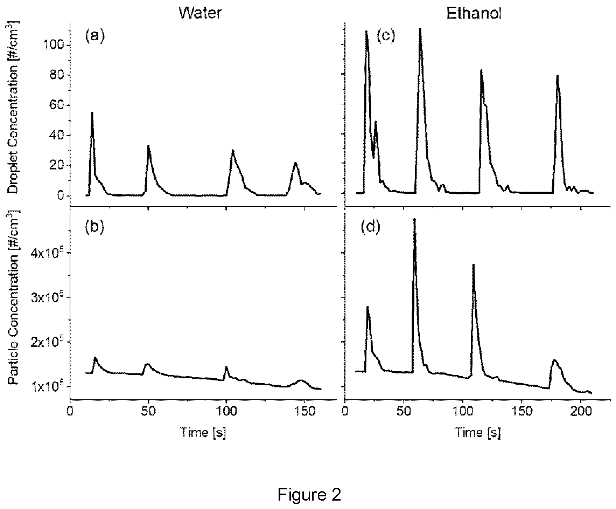

Selectivity of the device for counting of respiratory droplets and particles comprising water with significantly higher dielectric constant than the surrounding particles and air or other medium are represented in FIGS. **2-6****.**

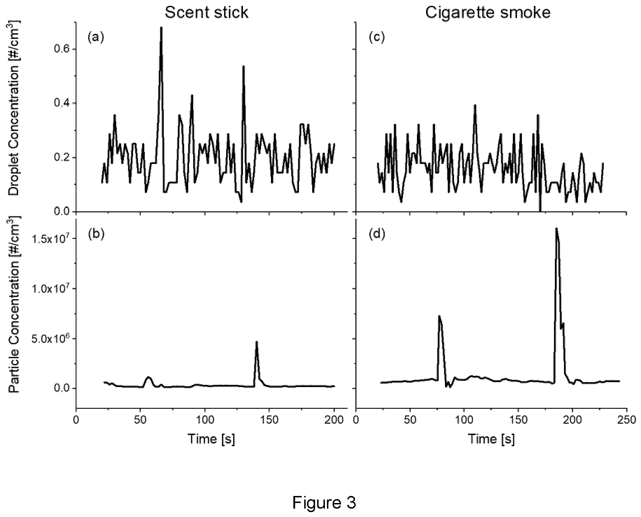

The comparative results of measuring droplets of water and ethanol are shown in the FIG. **2****.** The CPC results (b, d) show concentration of all particles, while the device results show only concentration of droplets of water (a) and ethanol (c). The comparative results of measuring smoke from smoldering scent stick and smoke from smoldering cigarette are shown in the FIG. **3****.** The CPC results (b, d) show concentration of all particles, while the device results show only concentration of droplets of water. The CPC (b, d) detected very high concentrations of particles in a range of 10⁶ particles/cm³. The concentrations measured with the said device (a, c) remained close to the noise level. The CPC has detected both dispersed water/ethanol and smoke produced by scent stick and cigarette. The said device detected only dispersed water/ethanol droplets with significantly higher dielectric constant than the carbonous particles as burning products of smoldering cigarette and scent stick. This is evidence of the selectivity of the method for detection of single respiratory droplets in ambient air.

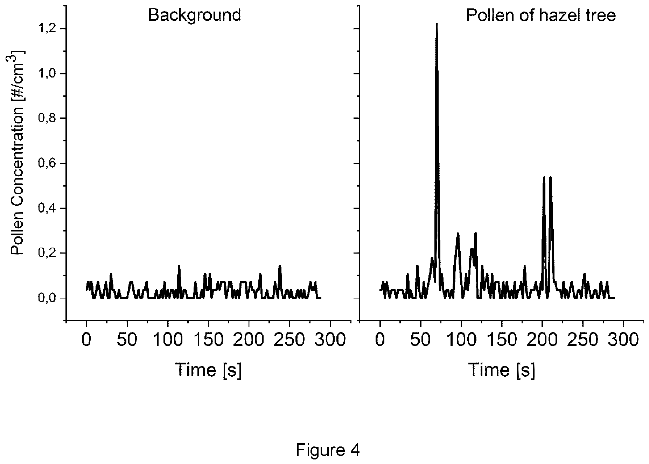

The results of the detection of pollen of domestic hazel tree are shown in the FIG. **4****.** The measurements were taken indoors at normal room conditions. Firstly, a measurement of the background was taken. These results of the background are shown in the picture (a). Then a branch with hazel flowers was shaken in front of the said device inlet (FIG. **1**-100). These results are shown in the picture (b). This is evidence of detection of pollen indoors by the said device.

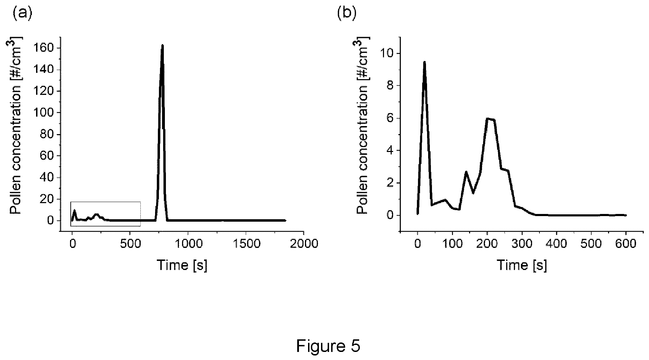

The results of the detection of pollen of domestic birch tree are shown in the FIG. **5****.** The measurements were taken outdoors below the blooming birch tree. The temperature was 22±1 °C, relative humidity was 35 % and a wind speed was 2-3 m/s flowing unevenly. Results of the measurement are shown in the picture (a). Results of the first 600 seconds of measurement are shown in the picture (b). The variations in the peaks' intensity are a consequence of wind directions blowing towards or away from the said device inlet (FIG. **1**-100). This is evidence of detection of pollen at outdoor conditions by the said device.

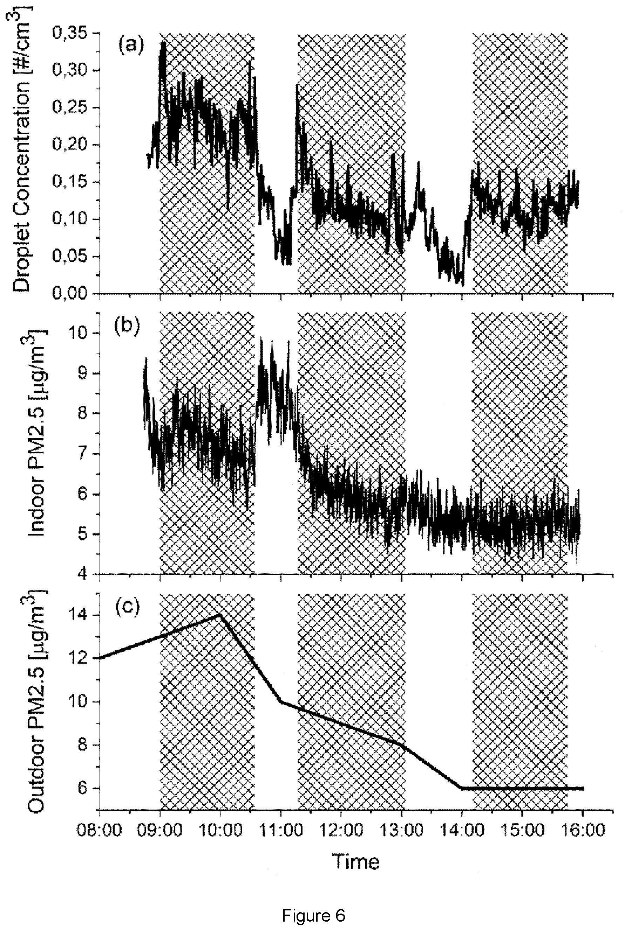

Case studies using the device for the selective detection of single respiratory droplets in a real-life environment was performed by a simultaneous measurement by particulate detector (Sensirion, SEN55), and the said device at room temperature (25°C). The comparative results of the measurement of concentrations respiratory droplets and of solid particulate matter PM2.5 are shown in the FIG. **6****.** The measurement was taken in a conference room with 60 adult attendees. The conference had 3 sessions with closed windows (net background) and 2 breaks (white background), during which attendees left the room and windows were open. The measurement conducted by the device is shown in the picture (a). The measurement conducted by the particulate detector is shown in the picture (b). The PM2.5 data from outdoor air pollution originated from National Agency for Environment (ARSO) are shown in the picture (c). The measurements reveal that the concentration of respiratory droplets decreased when attendees left the room and the window were open, and increased as soon as attendees returned to the room. The gradual decrease of concentration of respiratory droplets followed the decreased number of the attendees during the day. On the other hand, the concentration of PM 2.5 did not follow the presence of the attendees in the room, but gradually decreased with the decrease of outdoor air pollution. The device's measurements remained unaffected by fluctuations in outdoor air quality. This is evidence of the selectivity of the method for selective detection of single respiratory droplets.

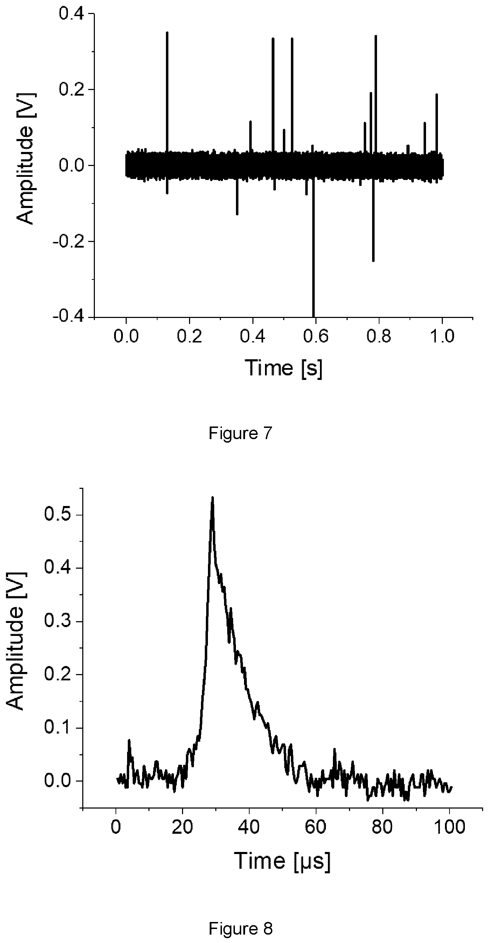

FIG. **7** shows signals received from the device during measuring of respiratory droplets in ambient air. Each pulse represents a detected droplet. An enlarged image of a single signal following an impact of a droplet to the sensor is shown in FIG. **8****.** The length of the signal is approximately 20 µs.

## Claims

1. A capacitive sensor for selective counting of single droplets in air, **characterized in that** the capacitive sensor comprises:
- two planar electrodes, wherein a first electrode is on or near the geometrical axis of the said nozzle and the second electrode surrounding the first electrode, wherein the first electrode is connected with a virtual ground, and the second electrode is arranged to receive a constant voltage supply, or vice versa,
- a thin layer of a non-conductive material with a high dielectric constant deposited at least partly on one or both said electrodes, and the layer is impermeable to electricity, fluid, and vapor,
- a dielectric space between and in vicinity of the said first electrode and the said second electrode, wherein the said capacitor is configured such that impacting the dielectric space with a gas comprising droplets temporarily causes changes in capacitance in a microsecond time scale of said capacitor such that the number of changes of capacitance indicates the number of single droplets impacted the said dielectric space.

2. The capacitive sensor for selective counting of single droplets in air according to claim 1, wherein the first electrode, second electrode, or first and the second electrodes comprise a plurality of portions.

3. The capacitive sensor for selective counting of single droplets in air according to claim 1 or claim 2, wherein dielectric space comprises a two-dimensional space or a three-dimensional space.

4. The capacitive sensor for selective counting of single droplets in air according to claim 1, 2 and/or 3, wherein said electrodes have interdigital shape.

5. The capacitive sensor for selective counting of single droplets in air according to claim 1, 2 and/or 3, wherein the said electrodes are in the same plane or in different planes.

6. A device for selective counting of single droplets in air, **characterized in that** the device comprises at least one capacitive sensor according to any of the preceding claims.

7. The device according to the preceding claims, wherein the device comprises at least the following:
- a housing defining a chamber wherein the housing is provided with an opening, which functions as an inlet to the interior of the chamber,
∘ a nozzle installed or formed in the inlet, said nozzle arranged to direct and accelerate air flow from the surroundings of the device at high speed towards the capacitive sensor,
∘ the capacitive sensor,
- a pump for sucking air into the chamber and for regulation of the air flow through the device, wherein said pump may be installed inside or outside of the device, wherein in case of the latter option, the pump is connected to the chamber via a tube or a pipe to allow sucking of air as well as air flow regulation, and
- electronics for signal acquisition and data processing, wherein said electronics are provided inside or outside the chamber.

8. The device according to claim 7, wherein the nozzle may be provided in the inlet or the inlet is formed into a nozzle with suitable diameter of the opening to allow air flow.

9. The device according to claim 7 or 8, wherein the second said electrode is the nozzle, which directs of said airflow with respiratory droplets towards the said first electrode, wherein the nozzle is made of electrically conductive material and is connected with a virtual ground.

10. The device according to claim 9, wherein the nozzle is metallic.

11. The device according to any claim from 7 to 10, wherein said electrodes forming the capacitor are fabricated on a 4-layer PCB (Printed Circuit Board).

12. A method for selective counting of single respiratory droplets in ambient air, **characterized in that** the method comprises the following steps:
a) sucking of air into the chamber with the pump,
b) accelerating air through the inlet or the nozzle toward the sensor, wherein a constant voltage (V) is applied to one electrode of the capacitor, while the second electrode is grounded,
c) detecting the change in capacitance due to the change of the electric field of the sensor upon impacts of particles, and measuring the pulse capacitance in microsecond time scale when said droplets impact said dielectric space between said first electrode and said second electrode,
d) each resultant capacitance change (ΔC) is translated into a voltage change (ΔV) according to equation: ΔV= Q/ΔC, wherein said voltage change is amplified to a measurable voltage pulse, and
e) determining the number of pulses caused by changes of capacitance from said number of droplets per volume unit of air in microsecond time scale entering said dielectric space, wherein said changes of pulse capacitance indicate the number of single droplets in a microsecond time scale.

13. The method for selective counting of single respiratory droplets in ambient air according to claim 12, wherein said voltage change is amplified with a charge sensitive amplifier, so that said voltage change causes the input-end potential of the charge amplifier to rise, while simultaneously, a potential with reverse polarity appears at the output- end of the charge amplifier, and the output-end potential operates through a feedback loop to return the input-end potential to the initial value,
and wherein the feedback resistance (R_f) is connected in parallel to the feedback capacitance (C_f), thus the output voltage pulse discharges with a time constant (τ) determined by τ =C_f R_f.

14. Use of the capacitive sensor, the device and/or the method according to any of the preceding claim in detection of various water-comprising droplets, such as human or animal respiratory droplets, bioaerosols, droplets comprising bacteria or viruses, water-containing pollen grains, droplets of a mixture of water and oil forming cooling fluids, droplets of a mixture of liquid gas, water and oil forming cryogenic cooling fluids, frozen water droplets in the atmosphere.

15. Use according to the preceding claim in controlling indoor air quality during seasonal respiratory epidemics and pandemics.
